# EUROPÄISCHE PATENTSCHRIFT

(11) **EP 3 871 831 B1**
(45) Veröffentlichungstag und Bekanntmachung des Hinweises auf die Patenterteilung: **03.07.2024**
(21) Anmeldenummer: 21157582.4
(22) Anmeldetag: 17.02.2021
(51) Int. Cl.: B23Q 11/08, B23Q 5/00, F16P 1/00, F16P 3/02

(54) **SCHUTZABDECKUNG MIT ANTRIEBSEINRICHTUNG ZUR ABDECKUNG VON BEWEGLICHEN MASCHINENTEILEN**
PROTECTIVE COVER WITH DRIVE DEVICE FOR COVERING MOVABLE MACHINE PARTS
RECOUVREMENT DE PROTECTION POURVU DE DISPOSITIF D'ENTRAÎNEMENT DESTINÉ AU RECOUVREMENT DES PIÈCES DE MACHINE EN MOUVEMENT

(30) Priorität: 26.02.2020 DE 202020101040 U
(43) Veröffentlichungstag der Anmeldung: 01.09.2021
(73) Patentinhaber: Arno Arnold GmbH, 63179 Obertshausen (DE)
(72) Erfinder: MANG, Wolf-Matthias, 63179 Obertshausen (DE)
(74) Vertreter: advotec.

(56) Entgegenhaltungen:
- DE-A1- 3 806 354
- DE-U- 1 945 425
- FR-A1- 2 085 809

## Beschreibung

Die Erfindung betrifft eine Schutzabdeckung mit einer Antriebseinrichtung nach dem Oberbegriff des Anspruchs 1.

Aus dem Stand der Technik sind Schutzabdeckungen bereits bekannt und dienen insbesondere, jedoch keineswegs ausschließlich, der Abdeckung von beweglichen Maschinenteilen oder dergleichen. Derartige Schutzabdeckungen weisen in der Länge veränderliche Elemente auf. Auf diese Weise werden die Maschinenteile sowohl im ein- als auch im ausgefahrenen Zustand nicht nur vor Fremdeinflüssen, wie beispielsweise Spänen, Staubpartikeln oder sonstigen Verschmutzungen, geschützt, sondern können zudem gegenüber der Umgebung abgedichtet werden. Beispielsweise sind die DE 10 2006 033 607 B4 und die DE 20 2014 008 987 U1 und die FR 2 085 809 A1, auf der der Oberbegriff des Anspruchs 1 basiert, zu nennen. Die als Abdeckung von beweglichen Maschinenteilen oder dergleichen fungierenden Elemente der Schutzabdeckung können dabei mit einem Rahmenelement und/oder einem Stützrahmen verbunden sein, welches/r der Stabilisierung dieser, insbesondere der Abstützung dieser, dient.

Bei den aus dem Stand der Technik bekannten Schutzabdeckungen hat es sich jedoch als Nachteil erwiesen, dass die verwendeten Stützrahmen und/oder Rahmenelemente nicht die erforderliche Vorspannkraft für eine gleichmäßige und widerstandsfreie Verfahrbarkeit der Schutzabdeckung aufweisen, so dass die Schutzabdeckungen störungsanfällig auf einer Führung verschiebbar gelagert sind sowie oftmals durchhängen und somit keine Abdichtung der beweglichen Maschinenteile gegenüber der Umgebung erzielen. Zudem hat es sich als Nachteil erwiesen, dass die Schutzabdeckungen nur unter größerem Krafteinsatz verfahren werden können.

Es besteht daher ein großer Bedarf an einer Schutzabdeckung, welche eine einfache, zuverlässige, dauerhafte, gleichmäßige und widerstandsfreie Verfahrbarkeit derselben ermöglicht. Weiterhin sollte die Schutzabdeckung auf einfache und zuverlässige Art und Weise die erforderliche Vorspannkraft gewährleisten, sowie eine zuverlässige und auch fortwährende Abdichtung der beweglichen Maschinenteile gegenüber der Umgebung sicherstellen. Zudem sollte die Schutzabdeckung kostengünstig herstellbar, langlebig und individuell an den zu schützenden Bereich der Maschine anpassbar sein, wobei ein weiteres Augenmerk darauf liegt, die Schutzabdeckung möglichst kompakt und platzsparend auszugestalten. Die Erfindung hat sich daher die Aufgabe gestellt, eine Schutzabdeckung bereitzustellen, um die oben genannten Schwierigkeiten zu überwinden und um vor allem die zuverlässige Verfahrbarkeit der Schutzabdeckung bei kleinstmöglichem Platzbedarf zu gewährleisten.

Diese Aufgabe wird auf überraschend einfache aber wirkungsvolle Weise durch eine Schutzabdeckung nach der Lehre des unabhängigen Hauptanspruchs 1 gelöst.

Erfindungsgemäß ist eine Schutzabdeckung mit mindestens einem Rahmenelement und mit mindestens einem Schutzabdeckungselement, wobei das Schutzabdeckungselement mit dem Rahmenelement lösbar oder unlösbar verbindbar ist, mit mindestens einer Laufschiene und mit mindestens einer Antriebseinrichtung vorgeschlagen. Die Schutzabdeckung weist dabei mindestens in einen Bereich der Laufschiene angeordnetes und form- und/oder kraftschlüssig mit der Laufschiene verbundenes Laufmittel auf und die Antriebseinrichtung und/oder das Laufmittel ist lösbar oder unlösbar mit dem Rahmenelement und/oder dem Schutzabdeckungselement verbunden. Die Schutzabdeckung ist dadurch gekennzeichnet, dass das Laufmittel von der Antriebseinrichtung in einem vorgegebenen Bewegungsbereich, der zwischen einer ersten Position der Schutzabdeckung und einer zweiten Position der Schutzabdeckung definiert ist, bewegbar ist, wobei die über die Antriebseinrichtung in das Laufmittel eingeleitete Energie, Kraft und/oder Moment mittels des Laufmittels und der Laufschiene in eine lineare Bewegung umsetzbar ist, und dass das Schutzabdeckungselement ein in der Länge veränderliches Faltenelement, eine in der Länge veränderliche Sperre, ein Rollo oder ein Schutzabdeckungssegment ist.

Die erfindungsgemäße Schutzabdeckung beruht auf dem Grundgedanken, dass die Antriebseinrichtung die Energie, die Kraft und/oder das Moment derart in das Laufmittel und/oder ein direkt oder indirekt damit verbundenes Element einleitet, so dass diese mittels des Zusammenspiels des Laufmittels und der Laufschiene in eine lineare Bewegung umsetzbar ist. Aufgrund dieser linearen Bewegung wird das mit der Antriebseinrichtung und/oder dem Laufmittel verbundene Rahmenelement und/oder Schutzabdeckungselement in dem vorgegebenen Bewegungsbereich und damit in zwei Bewegungsrichtungen, das heißt vor und zurück, bewegt. Auf diese Weise ist es möglich, eine gleichmäßige, zuverlässige und widerstandfreie Verfahrbarkeit der Schutzabdeckung zu gewährleisten.

Der Begriff "Schutzabdeckung" betrifft insbesondere, jedoch keineswegs ausschließlich, eine Abdeckung von beweglichen Maschinenteilen. Im Rahmen der Erfindung bezeichnet der Begriff daher die gesamte Schutzabdeckung, einen Bereich dieser und/oder mindestens ein Element dieser. Die erfindungsgemäße Schutzabdeckung umfasst mindestens ein Rahmenelement und mindestens ein in dem vorgegebenen Bewegungsbereich verfahrbares Schutzabdeckungselement. Das Rahmenelement kann Teil eines Stützrahmens sein, welcher mindestens ein, bevorzugt mehrere, Rahmenelemente umfasst, welche in der Regel in gleichmäßigem Abstand über die gesamte Länge der Schutzabdeckung verteilt sind, der Abstützung des Schutzabdeckungselementes dienen und welche im vorgegebenen Bewegungsbereich der Schutzabdeckung verfahrbar bzw. verschiebbar sind.

Der Begriff "Schutzabdeckungselement" betrifft mindestens ein in der Länge veränderliches Element, um die beweglichen Maschinenteile im ein- als auch im ausgefahrenen Zustand vor Fremdeinflüssen zu schützen und zudem gegenüber der Umgebung abzudichten. Bevorzugt ist das Schutzabdeckungselement ein in der Länge veränderliches Faltenelement, eine in der Länge veränderliche Sperre, ein Rollo oder ein Schutzabdeckungssegment. Weiterhin bevorzugt ist mehr als ein Schutzabdeckungselement vorgesehen, noch mehr bevorzugt zwei, drei, vier, fünf, sechs oder mehr gleiche oder unterschiedliche Schutzabdeckungselemente.

Der Begriff "Faltenelement" ist einem Fachmann bekannt und betrifft ein in der Länge veränderliches band- oder streifenförmiges Element. Bevorzugt entspricht die maximale Länge des Faltenelementes dem vorgegebenen Bewegungsbereich der Schutzabdeckung. Im Rahmen der Erfindung ist es denkbar, dass das Faltenelement lösbar oder unlösbar und/oder direkt oder indirekt mit einem Schutzabdeckungselement und/oder dem Rahmenelement verbunden ist. Einem Fachmann sind entsprechende Möglichkeiten der Verbindung zweier oder mehrerer Komponenten bekannt.

Der Begriff "Sperre" ist einem Fachmann bekannt und betrifft ein in der Länge veränderliches band- oder streifenförmiges Element, welches vorteilhafterweise die maximale Länge der vorgegebenen Bewegungsrichtung in Auszugsrichtung der Schutzabdeckung begrenzt, so dass die Sperre auf diese Weise ein übermäßiges Ausfahren der Schutzabdeckung verhindert bzw. eine maximale Ausfahrweite der Schutzabdeckung sicherstellt. Im Rahmen der Erfindung ist es denkbar, dass die Sperre lösbar oder unlösbar und/oder direkt oder indirekt mit einem Schutzabdeckungselement und/oder dem Rahmenelement verbunden ist. Einem Fachmann sind entsprechende Möglichkeiten der Verbindung zweier oder mehrerer Komponenten bekannt. Somit ist die Schutzabdeckung vor Überbeanspruchung, insbesondere einer Überdehnung, geschützt.

Der Begriff "Rollo" ist einem Fachmann bekannt und betrifft ein auf eine Welle aufrollbares und/oder aufwickelbares und somit in der Länge veränderliches Element. Bevorzugt entspricht die maximale Länge des Rollos dem vorgegebenen Bewegungsbereich der Schutzabdeckung. Im Rahmen der Erfindung ist es denkbar, dass das Rollo lösbar oder unlösbar und/oder direkt oder indirekt mit einem Schutzabdeckungselement und/oder dem Rahmenelement verbunden ist. Einem Fachmann sind entsprechende Möglichkeiten der Verbindung zweier oder mehrerer Komponenten bekannt.

Der Begriff "Schutzabdeckungssegment" ist einem Fachmann bekannt und betrifft ein, eine geschlossene Front bildendes Element. Bevorzugt sind mindestens zwei oder mehr Schutzabdeckungssegmente umfasst, welche beim Verfahren der Schutzabdeckung einander teleskopisch hintergreifen, um die Maschinenteile im ein- als auch im ausgefahrenen Zustand der Schutzabdeckung vor Fremdeinflüssen zu schützen und zudem gegenüber der Umgebung abzudichten. Dabei ist es denkbar, dass das Schutzabdeckungssegment lösbar oder unlösbar und/oder direkt oder indirekt mit einem Schutzabdeckungselement und/oder dem Rahmenelement verbunden ist, sowie einteilig oder mehrteilig mit dem Rahmenelement ausgestaltet ist. Zudem ist es denkbar, dass das Rahmenelement Teil des Schutzabdeckungssegments ist. Einem Fachmann sind entsprechende Möglichkeiten der Verbindung zweier oder mehrerer Komponenten bekannt. Weiterhin ist es denkbar, dass das Schutzabdeckungssegment gelenkig gelagert und/oder unter fortwährendem Andruck mittels speziellen Befestigungsklammern starr mit der Schutzabdeckung verbunden ist. Bevorzugt sind die Schutzabdeckungssegmente in der Art geformt, dass sie eine abstreifende Wirkung, insbesondere eine stark abstreifende Wirkung, erzielen. Dies bietet den Vorteil, dass die Schutzabdeckung nicht nur fluid- und/oder staubdicht ist, sondern auch starke Verschmutzungen abhält, wie beispielsweise heiße und/oder scharfkantige Späne. Daher sind die Maschinenteile auch vor starken Verschmutzungen zuverlässig geschützt.

Der Begriff "Laufschiene" betrifft eine zur Bewegung und Verfahrbarkeit der Schutzabdeckung vorgegebene Bahn, welche bevorzugt an dem Rahmen einer zu schützenden Werkzeugmaschine angeordnet und mit dieser verbindbar ist. Bevorzugt ist die Laufschiene im Bereich einer Öffnung des Rahmens der Werkzeugmaschine angeordnet, die oberhalb des zu schützenden, beweglichen Teils der Werkzeugmaschine angeordnet ist. Dabei ist es denkbar, dass die Laufschiene gerade, gekrümmt, geneigt und/oder gebogen ausgestaltet und/oder ausgerichtet ist. Bevorzugt weist die Schutzabdeckung mindestens eine, noch mehr bevorzugt zwei, drei, vier, fünf, sechs oder mehr Laufschienen auf. Weiter ist es denkbar, dass die mindestens zwei Laufschienen synchron zueinander oder unterschiedlich ausgestaltet und/oder ausgerichtet sind, sowie parallel oder unterschiedlich zueinander verlaufen. Im Rahmen der Erfindung ist es dabei von untergeordneter Bedeutung, welchen Querschnitt die Laufschiene aufweist. So ist es beispielsweise denkbar, dass dieser rund, eckig oder polygon ist.

Der Begriff "Laufmittel" betrifft ein von der Schutzabdeckung umfasstes Mittel, welches dazu geeignet ist, entlang der Laufschiene bewegt zu werden. Dabei ist es wichtig, dass das Laufmittel form- und/oder kraftschlüssig mit der Laufschiene verbunden ist. Zudem ist es als wesentlich erkannt worden, dass das Laufmittel im Zusammenspiel mit der Laufschiene die über die Antriebseinrichtung in das Laufmittel und/oder ein direkt oder indirekt damit verbundenes Element eingeleitete Energie, Kraft und/oder Moment in eine lineare Bewegung umsetzt. Weiterhin ist es denkbar, dass ein oder mehrere Übersetzungsgetriebe vorhanden sind. Im Rahmen der Erfindung ist es beispielsweise denkbar, dass das Laufmittel ein Gleitlager oder Schieber ist, welches entlang der Laufschiene gleitet. Weiterhin ist es beispielsweise denkbar, dass das Laufmittel eine Laufrolle oder ein Ritzel ist, welches drehbar gelagert an der Laufschiene bewegt wird. Bevorzugt ist es denkbar, dass die Schutzabdeckung ein, zwei, drei, vier, fünf, sechs oder mehr Laufmittel aufweist.

Der Begriff "Antriebseinrichtung" betrifft eine konstruktive Einheit, welche dazu geeignet ist, eine Energie, eine Kraft und/oder ein Moment in das Laufmittel und/oder ein direkt oder indirekt damit verbundenes Element einzuleiten. Einem Fachmann ist es dabei offensichtlich, dass die Antriebseinrichtung und das Laufmittel mittels dem Fachmann bekannten Maßnahmen in Kontakt miteinander stehen, um die Verfahrbarkeit der Schutzabdeckung sicherzustellen. Im Rahmen der Erfindung ist es von untergeordneter Bedeutung, wie die Antriebseinrichtung angetrieben, positioniert und/oder ausgestaltet ist. So ist es beispielsweise denkbar, dass die Antriebseinrichtung verbrennungsmotorisch, elektrisch, hydraulisch, pneumatisch, manuell und/oder aus einer Mischung daraus angetrieben ist. Weiterhin ist es denkbar, dass die Antriebseinrichtung eine oder mehrere Übersetzungsgetriebe aufweist. Bevorzugt ist es denkbar, dass die Schutzabdeckung ein, zwei, drei, vier, fünf, sechs oder mehr Antriebseinrichtungen aufweist.

Weiterhin ist es als wesentlich erkannt worden, dass die Antriebseinrichtung und/oder das Laufmittel lösbar oder unlösbar und/oder direkt oder indirekt mit dem Rahmenelement und/oder dem Schutzabdeckungselement verbunden ist, so dass diese in dem vorgegebenen Bewegungsbereich bewegbar geführt sind. Dem Fachmann sind entsprechende Möglichkeiten der Verbindung von Komponenten bekannt.

Der Begriff "vorgegebener Bewegungsbereich" betrifft die Auszugsrichtung der Schutzabdeckung, in welcher die Schutzabdeckung beliebig oft vor- und zurückverfahren und damit bewegt werden kann. Der Bewegungsbereich ist dabei zwischen einer ersten Position der Schutzabdeckung und einer zweiten Position der Schutzabdeckung definiert. Bevorzugt ist es denkbar, dass die zweite Position der Schutzabdeckung durch den Endrahmen definiert ist, welcher der maschinenseitigen Befestigung der Schutzabdeckung dient. Weiterhin bevorzugt ist es denkbar, dass die erste Position der Schutzabdeckung durch die maximale Ausfahrweite der Schutzabdeckung definiert ist.

Der Begriff "lineare Bewegung" betrifft die definierte Bewegung der Schutzabdeckung innerhalb des durch die erste und zweite Position der Schutzabdeckung vorgegebenen Bewegungsbereichs, welche dadurch realisiert wird, dass die über die Antriebseinrichtung in das Laufmittel und/oder ein direkt oder indirekt damit verbundenes Element eingeleitete Energie, Kraft und/oder Moment mittels des Zusammenspiels aus Laufmittel und Laufschiene in eine lineare Bewegung umgesetzt wird. Dabei bezeichnet der Begriff "linear" lediglich eine definierte Bewegung des mit der Antriebseinrichtung und/oder dem Laufmittel verbundenen Rahmenelementes und/oder des Schutzabdeckungselementes mittels des Laufmittels entlang der Laufschiene in zwei Bewegungsrichtungen, das heißt vor und zurück. Einem Fachmann ist es verständlich, dass die lineare Bewegung dabei direkt abhängig von der Ausgestaltung und/oder Ausrichtung der Laufschiene ist. Dabei ist es denkbar, dass die Laufschiene gerade, gekrümmt, geneigt und/oder gebogen ist, so dass die daraus folgende lineare Bewegung in zwei definierte Bewegungsrichtungen, das heißt vor und zurück, der Ausgestaltung und/oder Ausrichtung der Laufschiene folgt und eine gerade, gekrümmte, geneigte und/oder gebogene Bewegung ist.

Der Begriff "Abdichtung" beschreibt ein Maß der Dichtigkeit der beweglichen Maschinenteile gegenüber der Umgebung, das heißt gegenüber einem Fremdeinfluss, d.h. einem Stoff, einem Fluid und/oder einem Gemisch davon. Der Begriff "Fremdeinfluss" betrifft beispielsweise, jedoch keineswegs ausschließlich, alle Einflüsse, welche einerseits den beweglichen Maschinenteilen, der Maschine und/oder andererseits der Umgebung schaden. Diesbezüglich sind beispielsweise Fluide, wie Feuchtigkeit und/oder Gase, Betriebsmittel, wie Öl und/oder Schmiermittel, Späne, Staubpartikel und/oder sonstige Verschmutzungen denkbar.

Es ist einem Fachmann verständlich, dass der Begriff "Dichtigkeit" ein relativer Begriff ist und dass es keine absolute Abdichtung der beweglichen Maschinenteile gegenüber der Umgebung gibt. Im Rahmen der Erfindung ist Abdichtung bzw. Dichtigkeit daher so zu verstehen, dass sich diese immer auf vorher bestimmte, anforderungsgemäße und/oder vorgegebene Rahmenbedingungen bezieht, so dass der bewegliche Maschinenteil zuverlässig vor dem Fremdeinfluss geschützt ist. Es ist dabei verständlich, dass es aufgrund der Bewegung der Maschinenteile dazu kommen kann, dass kurzzeitig ein Durchtritt des Fremdeinflusses zu der Maschine bzw. von der Maschine weg möglich ist. Dabei ist die Möglichkeit eines derartigen kurzzeitigen Durchtritts des Fremdeinflusses von untergeordneter Bedeutung.

Für einen Fachmann auf dem einschlägigen Gebiet ist es daher offensichtlich, dass die erfindungsgemäße Schutzabdeckung keine absolute Dichtigkeit realisieren soll. Vielmehr ist es bevorzugt, dass der Durchtritt des Fremdeinflusses weitestgehend behindert ist, um Schäden an der Maschine und/oder eine Verschmutzung der Umgebung zu verhindern. Noch mehr bevorzugt ist der Durchtritt des Fremdeinflusses in eine der genannten Richtungen vollständig behindert, so dass zumindest teilweise und/oder kurzzeitig eine absolute Dichtigkeit erreichbar ist. Dabei ist die Dichtigkeit ebenfalls durch die konstruktive Ausgestaltung der Schutzabdeckung bzw. der Maschinenteile anpassbar. Dies ist allerdings mit erhöhten Kosten verbunden.

Im Rahmen der vorliegenden Erfindung ist das Maß der Abdichtung mindestens 90 %, mindestens 91 %, mindestens 92 %, mindestens 93 %, mindestens 94 %, mindestens 95 %, mindestens 96 %, mindestens 97 %, mindestens 98 %, mindestens 99 %, mindestens 99,5 %, mindestens 99,6 %, mindestens 99,7 %, mindestens 99,8 %, mindestens 99,9 % oder mehr.

Im Rahmen der Erfindung gilt es zu berücksichtigen, dass die Erreichung und/oder Erhaltung der anforderungsgemäßen Vorspannkraft, sowie das Maß der Abdichtung der Maschinenteile gegenüber der Umgebung maßgeblich von dem verwendeten Material, dem Einsatzort, den Einsatzbedingungen und/oder dem Verwendungszweck von der Schutzabdeckung abhängig sind. Dies ist einem Fachmann bekannt.

Der Begriff "bewegliches Maschinenteil" ist einem Fachmann bekannt und betrifft den vor Fremdeinflüssen zu schützenden, beweglichen Teil einer Werkzeugmaschine. Die Art, Größe, Dimension und/oder Ausgestaltung der Werkzeugmaschine ist dabei von untergeordneter Bedeutung.

Mittels der erfindungsgemäßen Schutzabdeckung ist es somit möglich, die gleichbleibende, widerstandsfreie, zuverlässige und störungsunanfällige Verfahrbarkeit der Schutzabdeckung mit gleichmäßig über die Länge der Schutzabdeckung verteilten Schutzabdeckungselementen sicherzustellen, sowie die beweglichen Maschinenteile zuverlässig vor Fremdeinflüssen und vor Einflüssen aus der am Einsatz bedingten Umgebung abzudichten. Gleichzeitig wird es erreicht, dass der von der Schutzabdeckung abzudeckende Arbeitsbereich aufgrund der kompakten Ausgestaltung der Schutzabdeckung möglichst groß ist. Zudem ist es möglich, insbesondere aufgrund der einfachen, kompakten und in der Teilevielfalt reduzierten Bauweise, in erheblichem Maße Herstellungs- und Materialkosten einzusparen. Überdies benötigt die erfindungsgemäße Schutzabdeckung nur einen geringen Bauraum, so dass sich diese auch für die Abdeckung von beweglichen Maschinenteilen eignet, bei welchen der Platz für eine entsprechende Schutzabdeckung stark eingeschränkt bzw. schlecht zugänglich ist. Gleichzeitig ist das Gewicht der erfindungsgemäßen Schutzabdeckung sehr gering.

Vorteilhafte Weiterbildungen der Erfindung sind in den Unteransprüchen dargestellt. In einer Ausgestaltung der vorliegenden Erfindung ist es denkbar, dass die Laufschiene eine Zahnstange und das Laufmittel ein Ritzel und/oder ein Getrieberad ist. Auf diese Weise ist es möglich, eine definierte und gleichmäßige Bewegung der Schutzabdeckung entlang dem vorgegebenen Bewegungsbereich vorzusehen, welche eine hohe Übersetzung, eine genaue Positionierung der Schutzabdeckung bei gleichzeitiger Verhinderung des Durchdrehens des Laufmittels sicherstellt.

In noch einer Ausgestaltung ist es denkbar, dass die Schutzabdeckung mindestens eine Führungsschiene und mindestens ein im Bereich der Führungsschiene angeordnetes und form- und/oder kraftschlüssig mit der Führungsschiene verbundenes Führungsmittel aufweist. Dabei ist es denkbar, dass die Führungsschiene gerade, gekrümmt, geneigt und/oder gebogen ausgestaltet und/oder ausgerichtet ist. Bevorzugt weist die Schutzabdeckung mindestens eine, noch mehr bevorzugt zwei, drei, vier, fünf, sechs oder mehr Führungsschienen auf. Weiter ist es denkbar, dass die mindestens zwei Führungsschienen synchron zueinander oder unterschiedlich ausgestaltet und/oder ausgerichtet sind, sowie parallel oder unterschiedlich zueinander verlaufen. Bevorzugt verläuft die Führungsschiene parallel zu einer entsprechenden Laufschiene. Weiter bevorzugt ist jeweils im Bereich der Führungsschiene mindestens ein Führungsmittel entsprechend angeordnet. Auf diese Weise ist es möglich eine definierte und gleichmäßige Führung von der Schutzabdeckung zur Vermeidung von Verkantungen und/oder Überspringen zu realisieren. Weiterhin wird eine definierte und gleichmäßige Abstützung des Rahmenelementes und/oder des Schutzabdeckungselementes erreicht. Dabei ist der Querschnitt der Führungsschiene von untergeordneter Bedeutung. So ist es denkbar, dass dieser rund, eckig oder polygon ist. Das Führungsmittel kann ein Gleitlager oder Schieber sein, um eine gleitende Führung auf der Führungsschiene zu realisieren. Weiterhin ist es denkbar, dass das Führungsmittel eine Laufrolle oder ein Ritzel ist, welches drehbar gelagert ist.

Weiterhin ist es denkbar, dass die Schutzabdeckung ein das Laufmittel umfassendes Übertragungselement aufweist und dass die über die Antriebseinrichtung in das Übertragungselement eingeleitete Energie, Kraft und/oder Moment in eine lineare Bewegung umsetzbar ist.

Der Begriff "Übertragungselement" ist einem Fachmann bekannt und betrifft ein Mittel, welches der Übertragung der eingeleiteten Energie, Kraft und/oder Moment auf das von dem Übertragungselement umfasste Laufmittel dient. Einem Fachmann ist es dabei offensichtlich, dass die Antriebseinrichtung und das Übertragungselement mittels dem Fachmann bekannten Maßnahmen in Kontakt miteinander stehen, um die Verfahrbarkeit der Schutzabdeckung sicherzustellen. Weiterhin ist es denkbar, dass ein oder mehrere Übersetzungsgetriebe vorhanden sind. Im Rahmen der Erfindung ist es von untergeordneter Bedeutung, welchen Querschnitt das Übertragungselement aufweist. So ist es beispielsweise denkbar, dass dieser rund, eckig oder polygon ist. Bevorzugt ist es denkbar, dass das Übertragungselement an einem Ende ein, zwei, drei, vier, fünf, sechs oder mehr Laufmittel aufweist. Weiter bevorzugt ist es denkbar, dass das Übertragungselement an beiden Enden jeweils ein, zwei, drei, vier, fünf, sechs oder mehr Laufmittel oder an jedem Ende eine unterschiedliche Anzahl an Laufmitteln aufweist. Weiterhin ist es denkbar, dass das Übertragungselement lösbar oder unlösbar und/oder direkt oder indirekt mit dem Rahmenelement und/oder dem Schutzabdeckungselement verbunden ist, so dass diese in dem vorgegebenen Bewegungsbereich bewegbar geführt sind. Dem Fachmann sind entsprechende Möglichkeiten der Verbindung von Komponenten bekannt. Auf diese Weise ist es möglich, die Positionierung der Antriebseinrichtung optimal an die vorherrschenden und/oder anforderungsgemäßen Bedingungen der zu schützenden Werkzeugmaschine anzupassen.

In noch einer Ausgestaltung ist es denkbar, dass das Übertragungselement und das Laufmittel einteilig oder mehrteilig ausgebildet sind, um auf diese Weise eine optimale Anpassung an die entsprechenden Bedingungen der Werkzeugmaschine zu realisieren. Auf diese Weise können in erheblichem Maße Herstellungskosten eingespart werden.

Weiterhin ist es denkbar, dass das Übertragungselement in der Art einer Antriebswelle ausgebildet ist, da diese besonders einfach zu realisieren ist. Zudem ist es einem Fachmann bekannt, dass die Antriebswelle durch die Antriebseinrichtung rotatorisch angetrieben wird, so dass es möglich ist, die Antriebseinrichtung platzsparend und/oder in kompakter Bauweise anzuordnen.

In einer Weiterbildung ist es denkbar, dass die Schutzabdeckung und/oder das Übertragungselement eine Blende aufweist, welche mit den einem Fachmann bekannten Maßnahmen lösbar oder unlösbar und/oder direkt oder indirekt mit der Schutzabdeckung, wie beispielsweise dem Rahmenelement und/oder dem Schutzabdeckungselement, und/oder dem Übertragungselement verbunden sein kann. Die Blende dient dazu, die Schutzabdeckung gegenüber Fremdeinflüssen abzudichten.

Erfindungsgemäß ist die Antriebseinrichtung ein Schneckengetriebe. Der Begriff "Schneckengetriebe" ist einem Fachmann bekannt und betrifft die Kombination aus Schraubgetriebe und Zahnradgetriebe, welches eine permanente gleitende Berührung realisiert. Auf diese Weise ist es möglich, bei platzsparender und/oder kompakter Bauweise hohe Übersetzungen zu erreichen, was insbesondere für große und/oder schwere Schutzabdeckungen wichtig ist. Zudem ist es bekannt, dass ein Schneckengetriebe zumindest in eine Richtung selbsthemmend ist, so dass die erfindungsgemäße Schutzabdeckung keiner Bremseinrichtung bedarf.

Weiterhin ist es denkbar, dass die Schutzabdeckung zwei Antriebseinrichtungen umfasst, was insbesondere für große und/oder schwere Schutzabdeckungen wichtig ist. Zudem ist diese Ausgestaltung vorteilhaft, da die Antriebseinrichtungen platzsparend und/oder in kompakter Bauweise anordenbar sind.

In noch einer Ausgestaltung ist es denkbar, dass die Schutzabdeckung einen Stützrahmen, einen Endrahmen und/oder eine Führung umfasst. Die Führung dient dabei beispielsweise, jedoch keineswegs ausschließlich, der zusätzlichen Führung und/oder Abstützung von Rahmenelement und/oder Schutzabdeckungselement, welche mittels eines Gleitlagers oder Schiebers gleiten oder mittels einer Laufrolle und eines Ritzels drehbar gelagert auf der Führung geführt werden können.

Weiterhin ist es denkbar, dass das Schutzabdeckungssegment eine erste Kante und eine der ersten Kante gegenüberliegende zweite Kante aufweist, wobei das Schutzabdeckungssegment im Bereich der ersten Kante mit dem Rahmenelement verbindbar ist und wobei die zweite Kante eine Abkantung aufweist. Diese Ausgestaltung bietet den Vorteil, dass eine Anpresskraft ausgeübt wird, so dass die Schutzabdeckungssegmente auch im ausgefahrenen Zustand eine zumindest teilweise und/oder kurzzeitige absolute bzw. erhöhte Dichtigkeit aufweisen. Zudem ist die Bildung einer geschlossenen Front der Schutzabdeckungssegmente verstärkt, sowie deren stark abstreifende Wirkung mit den zuvor genannten Vorteilen.

In einer Weiterbildung der Erfindung ist es denkbar, dass das Rahmenelement mindestens zwei Schutzabdeckungselemente miteinander verbindet und auf diese Weise größere Dimensionen der Schutzabdeckung ermöglicht. Des Weiteren ermöglicht diese Ausgestaltung im Wartungs- und/oder Reparaturfall den Austausch einzelner Teilbereiche der Schutzabdeckung.

Weiterhin ist es denkbar, dass die Schutzabdeckungselemente winklig zueinander versetzt angeordnet sind, um beispielsweise Schutzabdeckungen über Eck zu realisieren.

In einer weiteren vorteilhaften Ausgestaltung der Erfindung ist es denkbar, dass das Rahmenelement, der Stützrahmen, der Endrahmen und/oder das Schutzabdeckungssegment aus einem eigensteifen Kunststoffmaterial, einer eigensteifen Kunststoffverbindung, einem Metall, einer Metallverbindung und/oder einem Gemisch daraus ist. Bevorzugt ist das Rahmenelement, der Stützrahmen, der Endrahmen und/oder das Schutzabdeckungssegment aus einem Metall, insbesondere aus einem rostfreien Stahl oder rostfreien Edelstahl. Generell gilt, dass sich Metalle aufgrund ihrer weitreichenden Beherrschbarkeit der Materialeigenschaften eignen, so dass das Rahmenelement, der Stützrahmen, der Endrahmen und/oder das Schutzabdeckungssegment an die anforderungsgemäßen Bedingungen der Schutzabdeckung anpassbar sind. Weiterhin bevorzugt ist das Rahmenelement, der Stützrahmen, der Endrahmen und/oder das Schutzabdeckungssegment aus einem eigensteifen Kunststoffmaterial oder einer eigensteifen Kunststoffverbindung, welche sich jeweils durch ein geringes Eigengewicht bei gleichbleibender Stabilität auszeichnen. Eigensteife Kunststoffmaterialien und/oder eigensteife Kunststoffverbindungen sind einem Fachmann bekannt und eignen sich aufgrund ihrer weitreichenden beherrschbaren Materialeigenschaften besonders gut zum Einsatz in der Nähe von und/oder an beweglichen Teilen von Werkzeugmaschinen, da diese langlebig und unempfindlich gegenüber den dort auftretenden Einflüssen sind und beispielsweise eine frühe Materialermüdung verhindern. Zudem sind diese Materialien leicht verfügbar, kostengünstig und/oder leicht zu verarbeiten.

Es ist des Weiteren denkbar, dass das Faltenelement, die Sperre und/oder das Rollo aus einem Kunststoffmaterial, einer Kunststoffverbindung und/oder einem Gemisch daraus ist, wobei das Kunststoffmaterial, die Kunststoffverbindung und/oder das Gemisch daraus faltbar, textil, eigensteif und/oder thermoplastisch ist. Die zuvor genannten Materialien eignen sich einerseits aufgrund der weitreichenden Beherrschbarkeit der Materialeigenschaft, so dass das Faltenelement, die Sperre und/oder das Rollo exakt an die anforderungsgemäßen Bedingungen der Schutzabdeckung anpassbar ist. So ist es beispielsweise vorgesehen, dass das Faltenelement, die Sperre und/oder das Rollo aus einem festen, widerstandsfähigen Gewebe oder einer leichten Folie ist. Zudem sind die Materialien leicht verfügbar, kostengünstig und/oder leicht zu verarbeiten. Überdies eignen sich die genannten Materialien auch besonders gut zum Einsatz in der Nähe von und/oder an beweglichen Teilen von Werkzeugmaschinen, da diese langlebig und/oder unempfindlich gegenüber den dort auftretenden Einflüssen sind. So führt, beispielsweise, ein Kontakt mit den Betriebsmitteln einer Werkzeugmaschine, wie beispielsweise Schmiermittel, Spänen, Fluiden und dergleichen nicht zu einer Verschlechterung der Materialeigenschaft und damit zu einer Gefährdung der Funktionalität und/oder einer frühzeitigen Materialermüdung des entsprechenden Schutzabdeckungselements. Bevorzugt ist es denkbar, dass das Material ein thermoplastisches Kunststoffmaterial, eine thermoplastische Kunststoffverbindung und/oder ein thermoplastisches Gemisch daraus ist. Ein thermoplastisches Material ist ein Kunststoff, welcher sich in einem bestimmten Temperaturbereich reversibel verformen lässt. Zudem ist ein thermoplastischer Kunststoff schweißbar. Zu den bevorzugten thermoplastischen Kunststoffen gehören beispielsweise, jedoch nicht ausschließlich, Arcrylnitril-Butadien-Styrol (ABS), Polyamide (PA), Polylactide (PLA), Polymethylmethacrylat (PMMA), Polycarbonat (PC), Polyethylen (PE), Terephthalat (PT), Polypropylen (PP), Polystyrol (PS), Poetherkiton (PEIK) und Polyvinylchlorid (PVC), sowie entsprechende Copolymere und/oder Gemische.

Es wird davon ausgegangen, dass die Definitionen und Ausführungen der oben genannten Begriffe für alle in dieser Beschreibung im Folgenden beschriebenen Aspekte gelten, sofern nichts anderes angegeben ist. Weitere Einzelheiten, Merkmale und Vorteile der Erfindung ergeben sich aus der nachfolgenden Beschreibung der bevorzugten Ausführungsbeispiele in Verbindung mit den Unteransprüchen. Die Erfindung ist nicht auf die Ausführungsbeispiele beschränkt, sondern auf die Ansprüche. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktion einander entsprechende Elemente.

Im Einzelnen zeigen:
- **Fig. 1**: eine isometrische Darstellung der maschinenabgewandten Seite einer erfindungsgemäßen Schutzabdeckung; und
- **Fig. 2**: eine isometrische Darstellung der maschinenseitigen Seite einer erfindungsgemäßen Schutzabdeckung; und
- **Fig. 3**: eine isometrische Darstellung einer Antriebseinrichtung einer erfindungsgemäßen Schutzabdeckung; und
- **Fig. 4**: eine isometrische Darstellung einer Antriebseinrichtung einer erfindungsgemäßen Schutzabdeckung.

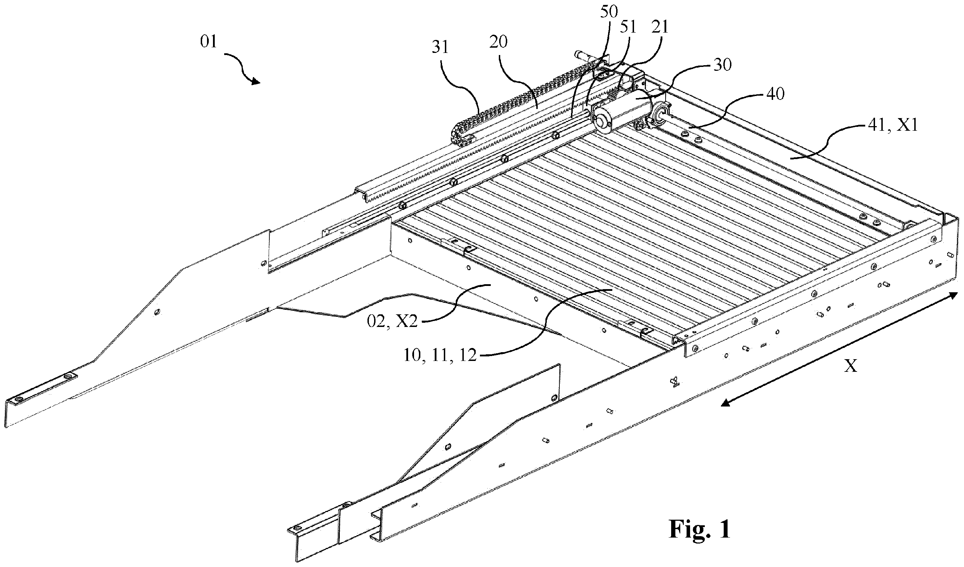

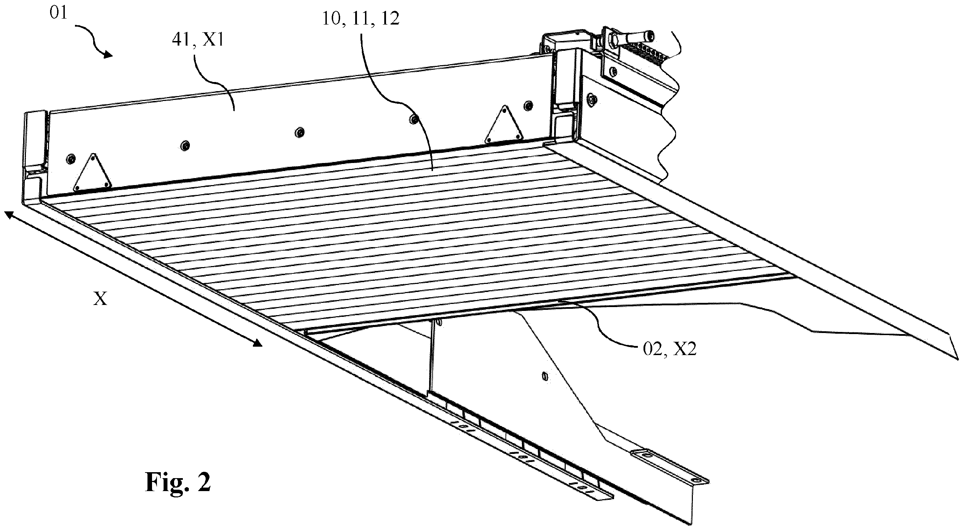

In der **Fig. 1** ist eine isometrische Darstellung der Rückseite einer erfindungsgemäßen Schutzabdeckung 01 und damit der maschinenabgewandten Seite dargestellt. In **Fig. 2** ist die zu der Werkzeugmaschine weisende Seite, die maschinenseitige Seite, der erfindungsgemäßen Schutzabdeckung 01 dargestellt.

Wie der Fig. 1 und der Fig. 2 deutlich zu entnehmen ist, weist die Schutzabdeckung 01 mehrere Rahmenelemente 10 und mit den Rahmenelementen 10 verbundene Schutzabdeckungselemente 11 auf, welche als beim Verfahren der Schutzabdeckung 01 telekopisch hintergreifende Schutzabdeckungssegmente 12 ausgebildet sind.

Weiterhin ist es der **Fig. 1** und der **Fig. 2** deutlich zu entnehmen, dass die Schutzabdeckung 01 ein Übertragungselement 40 mit daran angeordneter und verbundener Blende 41 aufweist. Die Schutzabdeckung 01 ist im vollständig ausgefahrenen Zustand gezeigt, so dass das Übertragungselement 40 mit der Blende 41 die erste Position X1 des Bewegungsbereichs X markiert. An der dem Übertragungselement 40 gegenüber-liegenden Seite, dem Endrahmen 02, befindet sich die zweite Position X2 des Bewegungsbereichs X. Der Endrahmen 02 dient dabei gleichzeitig der maschinenseitigen Befestigung der Schutzabdeckung 01.

Weiterhin ist es der Fig. 1 gut zu entnehmen, dass das Übertragungselement 40 an jedem Ende ein Laufmittel 21 in Form eines Ritzels aufweist, welches im Bereich der Laufschiene 20, welche hier als Zahnstange ausgestaltet ist, angeordnet ist und mit der Laufschiene 20 form- und/oder kraftschlüssig in Eingriff steht. Auf diese Weise ist es möglich, dass die mittels einer Antriebseinrichtung 30 in das als Antriebswelle ausgestaltete Übertragungselement 40 eingeleitete Rotationskraft über das Zusammenspiel des Laufmittels 21 und der Laufschiene 20 in eine lineare Bewegung entlang des vorgegebenen Bewegungsbereichs X umgesetzt wird. Auf diese Weise ist es realisiert, dass das mit dem Rahmenelement 10 und dem Schutzabdeckungssegment 12 verbundene Übertragungselement 40 in dem vorgegebenen Bewegungsbereich X, der zwischen der ersten Position X1 der Schutzabdeckung 01 und der zweiten Position X2 der Schutzabdeckung 01 definiert ist, linear geführt und bewegt ist. Zudem ist der **Fig. 1** die Kette 31 zur Führung des stromführenden Kabels für die Antriebseinrichtung 30 zu entnehmen.

Weiterhin ist es der Fig. 1 zu entnehmen, dass zur Sicherstellung einer definierten und gleichmäßigen Führung des Übertragungselements 40 mit den damit verbundenen Elementen und der Antriebseinrichtung 30 eine Führungsschiene 50 mit einem entsprechenden Führungsmittel 51 vorgesehen ist.

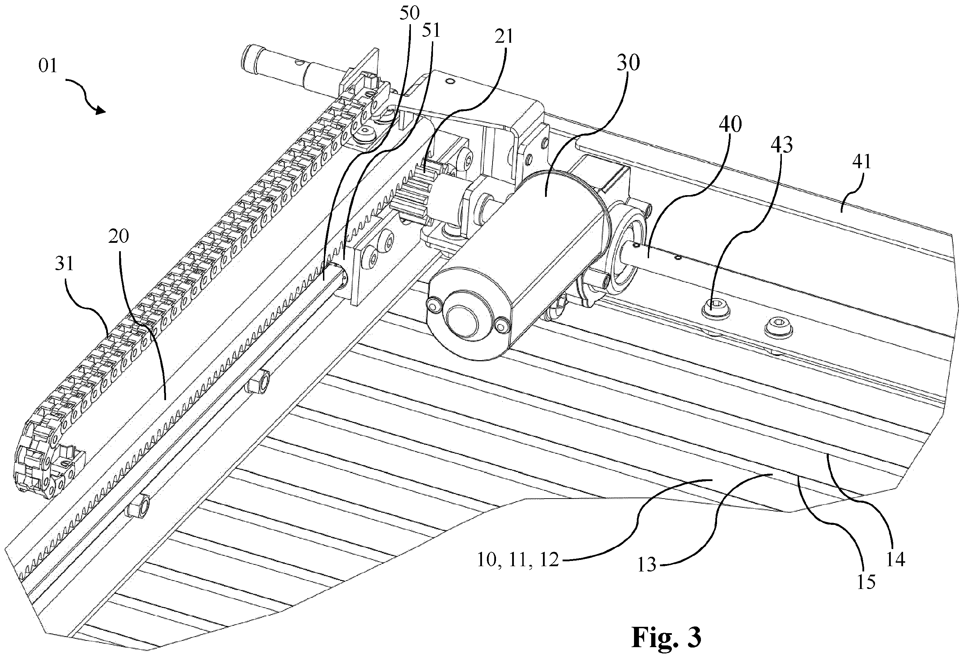

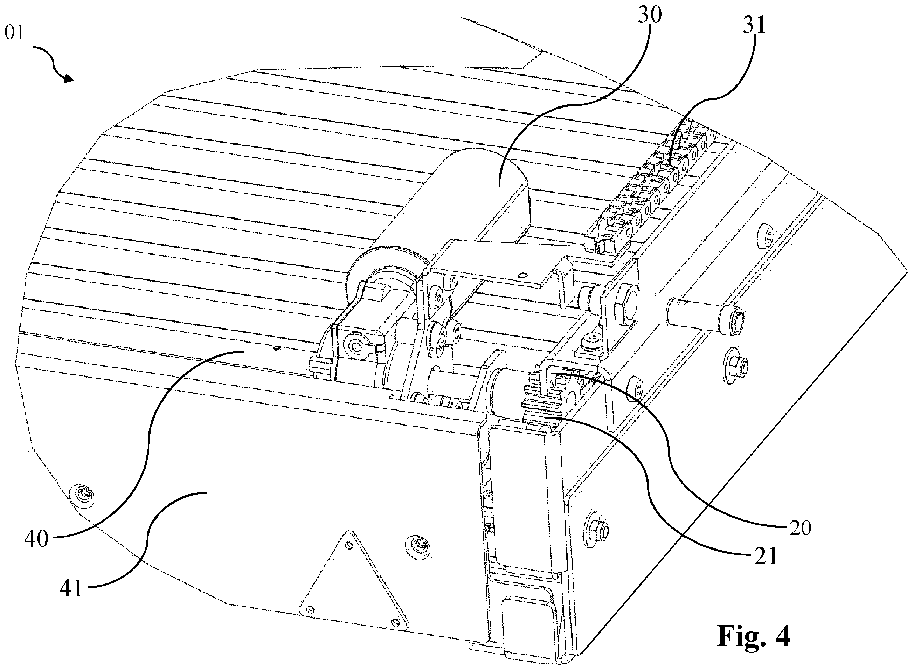

In den **Fign. 3** und **4** sind jeweils Detailaufnahmen einer Schutzabdeckung 01 mit einem Übertragungselement 40 und mit einer Antriebseinrichtung 30 dargestellt. Wie den **Fign. 3** und **4** deutlich zu entnehmen ist, ist die Antriebseinrichtung 30 als Schneckengetriebe ausgestaltet, so dass die über die Antriebseinrichtung 30 in das als Antriebswelle ausgestaltete Übertragungselement 40 eingeleitete Rotationsbewegung mittels des Laufmittels 21 und der Laufschiene 20 in eine lineare Bewegung umgesetzt wird. Weiterhin ist die Kette 31 zur Führung des stromversorgenden Kabels der Antriebseinrichtung 30 erkennbar.

In den Fig. 3 ist es zudem zu erkennen, dass das Übertragungselement 40 mittels eines Verbindungsmittels 43 mit dem Rahmenelement 10 und dem als Schutzabdeckungssegment 12 ausgebildeten Schutzabdeckungselement 11 verbunden ist. Das Schutzabdeckungssegment 12 weist dabei eine erste Kante 14 und eine der ersten Kante 14 gegenüberliegende zweite Kante 15 auf, wobei das Schutzabdeckungssegment 12 im Bereich der ersten Kante 14 mit dem Rahmenelement 10 verbunden ist und wobei die zweite Kante 15 eine Abkantung 13 aufweist.

Zudem ist in den **Fign. 3** und **4** das Übertragungselement 40 mit einer Blende 41 verbunden, um die Abdichtung der Schutzabdeckung 01 zu erhöhen.

Weiterhin ist es der Fig. 3 zu entnehmen, dass die Schutzabdeckung 01 eine definierte und gleichmäßige Führung des Übertragungselements 40 und der Antriebseinrichtung 30 sicherstellt und diesbezüglich eine Führungsschiene 50 und entsprechende Führungsmittel 51, hier in Form von Gleitlagern, aufweist. Weiterhin ist es erkennbar, dass die Laufschiene 20 als Zahnstange und das entsprechende Laufmittel 21 als Ritzel ausgebildet ist, um eine definierte und gleichmäßige Bewegung des Übertragungselements 40 und der Antriebseinrichtung 30 sicherzustellen.

## Patentansprüche

1. Schutzabdeckung (01) mit mindestens einem Rahmenelement (10) und mit mindestens einem Schutzabdeckungselement (11), wobei das Schutzabdeckungselement (11) mit dem Rahmenelement (10) lösbar oder unlösbar verbindbar ist, mit mindestens einer Laufschiene (20) und mit mindestens einer Antriebseinrichtung (30), wobei die Schutzabdeckung (01) mindestens ein im Bereich der Laufschiene (20) angeordnetes und form- und/oder kraftschlüssig mit der Laufschiene (20) verbundenes Laufmittel (21) aufweist, wobei das Laufmittel (21) von der Antriebseinrichtung (30) in einem vorgegebenen Bewegungsbereich (X), der zwischen einer ersten Position (X1) der Schutzabdeckung (01) und einer zweiten Position (X2) der Schutzabdeckung (01) definiert ist, bewegbar ist, wobei die über die Antriebseinrichtung (30) in das Laufmittel (21) eingeleitete Energie, Kraft und/oder das Moment mittels des Laufmittels (21) und der Laufschiene (20) in eine lineare Bewegung umsetzbar ist, und wobei die Antriebseinrichtung (30) und/oder das Laufmittel (21) lösbar oder unlösbar mit dem Rahmenelement (10) und/oder dem Schutzabdeckungselement (11) verbunden ist wobei das Schutzabdeckungselement (11) ein in der Länge veränderliches Faltenelement, eine in der Länge veränderliche Sperre, ein Rollo oder ein Schutzabdeckungssegment (12) ist,
**dadurch gekennzeichnet,**
**dass** die Antriebseinrichtung (30) ein Schneckengetriebe ist.

2. Schutzabdeckung (01) nach Anspruch 1,
**dadurch gekennzeichnet,**
**dass** die Laufschiene (20) eine Zahnstange und das Laufmittel (21) ein Ritzel und/oder Getrieberad ist.

3. Schutzabdeckung (01) nach Anspruch 1 oder 2,
**dadurch gekennzeichnet,**
**dass** die Schutzabdeckung (01) mindestens eine Führungsschiene (50) und mindestens ein im Bereich der Führungsschiene (50) angeordnetes und form- und/oder kraftschlüssig mit der Führungsschiene (50) verbundenes Führungsmittel (51) aufweist.

4. Schutzabdeckung (01) nach einem der vorhergehenden Ansprüche, **dadurch gekennzeichnet,**
**dass** die Schutzabdeckung (01) ein das Laufmittel (21) umfassendes Übertragungselement (40) aufweist und dass die über die Antriebseinrichtung (30) in das Übertragungselement (40) eingeleitete Energie, Kraft und/oder das Moment in eine lineare Bewegung umsetzbar ist.

5. Schutzabdeckung (01) nach Anspruch 4,
**dadurch gekennzeichnet,**
**dass** das Übertragungselement (40) und das Laufmittel (21) einteilig oder mehrteilig ausgebildet sind.

6. Schutzabdeckung (01) nach Anspruch 4 oder 5,
**dadurch gekennzeichnet,**
**dass** das Übertragungselement (40) in der Art einer Antriebswelle ausgebildet ist.

7. Schutzabdeckung (01) nach einem der vorhergehenden Ansprüche, **dadurch gekennzeichnet,**
**dass** die Schutzabdeckung (01) und/oder das Übertragungselement (40) eine Blende (41) aufweist.

8. Schutzabdeckung (01) nach einem der vorhergehenden Ansprüche, **dadurch gekennzeichnet,**
**dass** die Schutzabdeckung (01) zwei Antriebseinrichtungen (30) umfasst.

9. Schutzabdeckung (01) nach einem der vorhergehenden Ansprüche, **dadurch gekennzeichnet,**
**dass** die Schutzabdeckung (01) einen Stützrahmen, einen Endrahmen (02) und/oder eine Führung umfasst.

10. Schutzabdeckung (01) nach einem der vorhergehenden Ansprüche, **dadurch gekennzeichnet,**
**dass** das Schutzabdeckungssegment (12) eine erste Kante (14) und eine der ersten Kante (14) gegenüberliegende zweite Kante (15) aufweist, wobei das Schutzabdeckungssegment (12) im Bereich der ersten Kante (14) mit dem Rahmenelement (10) verbindbar ist und wobei die zweite Kante (15) eine Abkantung (13) aufweist.

11. Schutzabdeckung (01) nach einem der vorhergehenden Ansprüche, **dadurch gekennzeichnet,**
**dass** das Rahmenelement (10) mindestens zwei Schutzabdeckungselemente (11) miteinander verbindet.

12. Schutzabdeckung (01) nach Anspruch 11,
**dadurch gekennzeichnet,**
**dass** die Schutzabdeckungselemente (11) winklig zueinander versetzt angeordnet sind.

13. Schutzabdeckung (01) nach einem der vorhergehenden Ansprüche, **dadurch gekennzeichnet,**
**dass** das Rahmenelement (10), der Stützrahmen, der Endrahmen (02) und/oder das Schutzabdeckungssegment (12) aus einem eigensteifen Kunststoffmaterial, einer eigensteifen Kunststoffverbindung, einem Metall, einer Metallverbindung und/oder einem Gemisch daraus ist.

14. Schutzabdeckung (01) nach einem der vorhergehenden Ansprüche, **dadurch gekennzeichnet,**
**dass** das Faltenelement, die Sperre und/oder das Rollo aus einem Kunststoffmaterial, einer Kunststoffverbindung und/oder einem Gemisch daraus ist, wobei das Kunststoffmaterial, die Kunststoffverbindung und/oder das Gemisch daraus faltbar, textil, eigensteif und/oder thermoplastisch ist.

## Claims

1. A protective cover (01) having at least one frame element (10) and at least one protective cover element (11), the protective cover element (11) being permanently or detachably connected to the frame element (10), the protective cover (01) having at least one slide rail (20) and having at least one drive unit (30), the protective cover (01) having at least one slide means (21) disposed in the area of the slide rail (20) and connected to the slide rail (20) in a form-fitted and/or force-fit manner, the slide means (21) being movable by the drive unit (30) in a predefined movement area (X) which is defined between a first position (X1) of the protective cover (01) and a second position (X2) of the protective cover (01), the energy, force and/or momentum introduced into the slide means (21) via the drive unit (30) being convertible to a linear movement by means of the slide means (21) and the slide rail (20), and the drive unit (30) and/or the slide means (21) being permanently or detachably connected to the frame element (10) and/or to the protective cover element (11), the protective cover element (11) being a pleated element adjustable in length, a blocker adjustable in length, a shutter or a protective cover segment (12), **characterized in that**
the drive unit (30) is a worm gear.

2. The protective cover (01) according to claim 1,
**characterized in that**
the slide rail (20) is a toothed rack and the slide means (21) is a pinion and/or a gearwheel.

3. The protective cover (01) according to claim 1 or 2, **characterized in that**
the protective cover (01) has at least one guide rail (50) and at least one guide means (51) disposed in the area of the guide rail (50) and connected to the guide rail (50) in a form-fitted and/or force-fit manner.

4. The protective cover (01) according to any one of the preceding claims,
**characterized in that**
the protective cover (01) has a transmission element (40) comprising the slide means (21) and **in that** the energy, force and/or momentum introduced into the transmission element (40) via the drive unit (30) is convertible to a linear movement.

5. The protective device (01) according to claim 4,
**characterized in that**
the transmission element (40) and the slide means (21) are made in one or multiple pieces.

6. The protective cover (01) according to claim 4 or 5, **characterized in that**
the transmission element (40) is designed in the manner of a drive shaft.

7. The protective cover (01) according to any one of the preceding claims,
**characterized in that**
the protective cover (01) and/or the transmission element (40) has an escutcheon (41).

8. The protective cover (01) according to any one of the preceding claims,
**characterized in that**
the protective cover (01) comprises two drive units (30).

9. The protective cover (01) according to any one of the preceding claims,
**characterized in that**
the protective cover (01) comprises a support frame, an end frame (02) and/or a guide.

10. The protective cover (01) according to any one of the preceding claims,
**characterized in that**
the protective cover segment (12) has a first edge (14) and a second edge (15) opposite the first edge (14), the protective cover segment (12) being connectable to the frame element (10) in the area of the first edge (14) and the second edge (15) having a bevel (13).

11. The protective cover (01) according to any one of the preceding claims,
**characterized in that**
the frame element (10) connects at least two protective cover elements (11) to each other.

12. The protective cover (01) according to claim 11,
**characterized in that**
the protective cover elements (11) are disposed so as to be at an angular offset.

13. The protective cover (01) according to any one of the preceding claims,
**characterized in that**
the frame element (10), the support frame, the end frame (02) and/or the protective cover segment (12) is made of an inherently rigid plastic material, an inherently rigid plastic compound, a metal, a metal compound and/or a mixture thereof.

14. The protective cover (01) according to any one of the preceding claims,
**characterized in that**
the pleated element, the blocker and/or the shutter is made of a plastic material, a plastic compound and/or a mixture thereof, the plastic material, the plastic compound and/or the mixture thereof being foldable, textile, inherently rigid and/or thermoplastic.

## Revendications

1. Couvercle de protection (10) ayant au moins un élément de cadre (10) et ayant au moins un élément (11) de couvercle de protection, l'élément (11) de couvercle de protection pouvant être relié à l'élément de cadre (10) de manière permanente ou détachable, le couvercle de protection (10) ayant au moins un rail de glissage (20) et au moins une unité d'entraînement (30), le couvercle de protection (01) ayant au moins un moyen de glissage (21) disposé dans la zone du rail de glissage (20) et relié au rail de glissage (20) par forme et/ou par adhérence, le moyen de glissage (21) pouvant être déplacé par l'unité d'entraînement (30) dans une zone de mouvement (X) qui est définie entre une première position (X1) du couvercle de protection (01) et une deuxième position (X2) du couvercle de protection (01), l'énergie, la force et/ou le moment introduits dans le moyen de glissage (21) par l'unité d'entraînement (30) pouvant être convertis en un mouvement linéaire à l'aide du moyen de glissage (21) et du rail de glissage (20), et l'unité d'entraînement (30) et/ou le moyen de glissage (21) étant reliés à l'élément de cadre (10) et/ou à l'élément (11) de couvercle de protection de manière permanente ou détachable, l'élément (11) de couvercle de protection étant un élément plissé ajustable en longueur, un blocage ajustable en longueur, un store ou un segment (12) de couvercle de protection,
**caractérisé en ce que**
l'unité d'entraînement (30) est un engrenage à vis sans fin.

2. Couvercle de protection (01) selon la revendication 1, **caractérisé en ce que**
le rail de glissage (20) est une crémaillère et le moyen de glissage (21) est un pignon et/ou une roue d'engrenage.

3. Couvercle de protection (01) selon la revendication 1 ou 2, **caractérisé en ce que**
le couvercle de protection (01) a au moins un rail de guidage (50) et au moins un moyen de guidage (51) disposé dans la zone du rail de guidage (50) et relié au rail de guidage (50) par forme et/ou par adhérence.

4. Couvercle de protection (01) selon l'une quelconque des revendications précédentes,
**caractérisé en ce que**
le couvercle de protection (01) a un élément de transmission (40) comprenant le moyen de glissage (21) et **en ce que** l'énergie, la force et/ou le moment introduits dans l'élément de transmission (40) par l'unité d'entraînement (40) peuvent être convertis en un mouvement linéaire.

5. Couvercle de protection (01) selon la revendication 4, **caractérisé en ce que**
l'élément de transmission (40) et le moyen de glissage (21) sont faits en une ou plusieurs pièces.

6. Couvercle de protection (01) selon la revendication 4 ou la revendication 5,
**caractérisé en ce que**
l'élément de transmission (40) est configuré à la manière d'un arbre d'entraînement.

7. Couvercle de protection (01) selon l'une quelconque des revendications précédentes,
**caractérisé en ce que**
le couvercle de protection (01) et/ou l'élément de transmission (40) ont un panneau (41).

8. Couvercle de protection (01) selon l'une quelconque des revendications précédentes,
**caractérisé en ce que**
le couvercle de protection (01) comprend deux unités d'entraînement (30).

9. Couvercle de protection (01) selon l'une quelconque des revendications précédentes,
**caractérisé en ce que**
le couvercle de protection (01) comprend un cadre de support, un cadre terminal (02) et/ou un guidage.

10. Couvercle de protection (01) selon l'une quelconque des revendications précédentes,
**caractérisé en ce que**
le segment (12) de couvercle de protection a un premier bord (14) et un deuxième bord (15) vis-à-vis du premier bord (14), le segment (12) de couvercle de protection pouvant être relié à l'élément de cadre (10) dans la zone du premier bord (14) et le deuxième bord (15) ayant un biseau.

11. Couvercle de protection (01) selon l'une quelconque des revendications précédentes,
**caractérisé en ce que**
l'élément de cadre (10) relie au moins deux éléments (11) de couvercle de protection l'un à l'autre.

12. Couvercle de protection (01) selon la revendication 11, **caractérisé en ce que**
les éléments (11) de couvercle de protection sont disposés de manière à être décalés angulairement l'un par rapport à l'autre.

13. Couvercle de protection (01) selon l'une quelconque des revendications précédentes,
**caractérisé en ce que**
l'élément de cadre (10), le cadre de support, le cadre terminal (02) et/ou le segment (12) de couvercle de protection sont faits d'un matériau plastique intrinsèquement rigide, d'un composé plastique intrinsèquement rigide, de métal, d'un composé métallique et/ou d'un mélange de ceux-ci.

14. Couvercle de protection (01) selon l'une quelconque des revendications précédentes,
**caractérisé en ce que**
l'élément plissé, le blocage et/ou le store sont faits d'un matériau plastique, d'un composé plastique et/ou d'un mélange de ceux-ci, le matériau plastique, le composé plastique et/ou le mélange de ceux-ci étant pliables, textiles, intrinsèquement rigides et/ou thermoplastiques.
